# EUROPÄISCHE PATENTSCHRIFT

(11) **EP 0 680 869 B1**
(45) Veröffentlichungstag und Bekanntmachung des Hinweises auf die Patenterteilung: **02.12.1998**
(21) Anmeldenummer: 95105425.3
(22) Anmeldetag: 11.04.1995
(51) Int. Cl.: B62D 55/12, B62D 55/30

(54) **Raupenfahrwerk für Erntemaschinen**
Tracklaying gear for a harvester
Mécanisme de roulement à chenilles pour une moissonneuse

(30) Priorität: 04.05.1994 DE 4415689
(43) Veröffentlichungstag der Anmeldung: 08.11.1995
(73) Patentinhaber: CATERPILLAR INC., Peoria Illinois 61629 (US)
(72) Erfinder: Gersmann, Manfred, D-48321 Warendorf (DE)
(74) Vertreter: Wagner, Karl H., Dipl.-Ing.

(56) Entgegenhaltungen:
- EP-A- 0 585 721
- WO-A-90/00133
- WO-A-93/19975
- US-A- 2 998 998
- US-A- 3 056 633
- US-A- 3 872 939
- US-A- 4 227 748
- US-A- 4 923 257

## Beschreibung

Die Erfindung bezieht sich auf ein Raupenfahrwerk für Erntemaschinen, insbesondere Mähdrescher, mit in beiden Maschinenseiten angeordneter Räder-Raupenband-Fahreinheit, welche zwei um eine gemeinsame horizontale, quer zur Fahrtrichtung verlaufende Achse höhenverschwenkbar gelagerte Schwingen, zwei an den freien Enden der beiden Schwingen drehbar gelagerte Zwillingsräder und ein um beide Zwillingsräder geführt endlos umlaufendes Raupenband, ein auf mindestens eine Zwillingsradlagerung einwirkendes Spannorgan für das Raupenband und einen Antrieb für mindestens ein Zwillingsrad aufweist.

Ein derartiges Raupenfahrwerk ist z. E. aus der WO 90/11 923, der US-PS 2 898 965 und der DE 41 93 720 T1 bekannt geworden. Hierbei ist zum Teil eine Längenänderung des Raupenfahrwerkes offenbart, jedoch dabei über den Antrieb nichts ausgesagt und zum anderen Teil sind die Raupenfahrwerke in ihrer Länge nicht veränderbar und mit einem verhältnismäßig aufwendigen Antrieb ausgerüstet.

Weiterhin ist aus der US-A-4,227,748 ein Fahrwerk mit einem Raupenantrieb bekannt, bei dem die Raupe jeweils zwischen zwei Rädern gespannt angeordnet ist, von denen das eine mit einem Radantrieb verbunden ist und das andere an einer Schwinge gelagert ist, die mit einem hydraulischen Schwingenantrieb eine Abstandsverstellung der Räder zur Kettenspannung in Fahrtrichtung ermöglicht. Eine Abtrennbarkeit des Rades mit der Schwinge ist nicht vorgesehen.

Aufgabe der Erfindung ist es, ein einen Teil der Länge einer Erntemaschine einnehmendes Raupenfahrwerk dahingehend zu verbessern, daß es bei einfacher und kostengünstiger Konstruktion ein leichtes Verändern seiner in Fahrtrichtung verlaufenden Länge ermöglicht und mit einem der Längenänderung unabhängigen Antrieb ausgestattet ist.

Diese Aufgabe wird durch die kennzeichnenden Merkmale des Patentanspruches 1 gelöst.

Die sich daran anschließenden Unteransprüche beinhalten Gestaltungsmerkmale, welche vorteilhafte und förderliche Weiterbildungen der Aufgabenlösung darstellen.

Das Raupenfahrwerk gemäß der Erfindung zeigt eine einfache und kostengünstige Konstruktion und läßt sich in leichter Weise in seiner in Fahrtrichtung verlaufenden Länge verändern und ist dabei mit einem unabhängig von der Längenänderung eingebauten einfachen Antrieb ausgerüstet.

Bei diesem Raupenfahrwerk ist in einer, vorzugsweise der in Fahrtrichtung hinteren Schwinge, eine Trennlinie gelegt, durch die die hintere Schwinge mit dem es tragenden Zwillingsrad von der vorderen Schwinge abgenommen werden kann und dadurch die Längenänderung des Raupenfahrwerkes durchführbar ist, in dem zwischen die beiden Schwingen Adapterteile eingesetzt werden, oder aber die vordere Schwinge durch eine konstruktive Verlängerung den gleichen Zweck ergibt. Die beiden Schwingen sind in der Trennlinie durch Flanschverbindung zusammengehalten, und diese Flanschverbindung ist einerseits in ihrer Ausführung stabil und läßt sich andererseits bequem montieren und demontieren.

Unabhängig von dieser Trennung, die in bevorzugter Weise außerhalb der Pendelachse für beide Schwingen liegt, ist der Antrieb für das hintere Zwillingsrad in der hinteren Schwinge untergebracht, indem im Abstand zu der Pendelachse in die hintere Schwinge ein Kardanwelleneingang vorhanden ist und über in der hinteren Schwinge angeordnete Stirnräder ein Antrieb auf das hintere Zwillingsrad erfolgt. Die hintere Schwinge ist dabei als Getriebegehäuse für den Antrieb ausgebildet.

Die vordere Schwinge ist von einem Kastenprofil gebildet und einenends mit der Pendelachse verbunden und andererseits gelenkig an dem vorderen Zwillingsrad angebracht.

Zwischen der vorderen Schwinge und der Achslagerung des Zwillingsrades ist einerseits ein Spannorgan in Form eines Druckmittelzylinders vorgesehen und unterhalb der Pendelachse liegt ein auf das endlos umlaufende Raupenband einwirkendes Stützrad, welches über einen Pendelhebel mit der vorderen Schwinge höhenbeweglich gekoppelt und unter Einwirkung eines Druckorganes, vorzugsweise einer Druckmittelfeder steht.

Der Krafteingang außerhalb der Pendelachse in die hintere Schwinge und somit auch außerhalb der Lagerung des Raupenfahrwerkes an einer Querachse der Erntemaschine ermöglicht eine einfache Ausgestaltung des Pendelpunktes, d.h. der Pendelachse und der darauf sitzenden Lagerbuchse für die beiden Schwingen und ermöglicht weiterhin die Variationsmöglichkeiten in der Längenveränderung.

Auf den Zeichnungen ist ein Ausführungsbeispiel der Erfindung dargestellt, welches nachfolgend näher erläutert wird. Es zeigt:

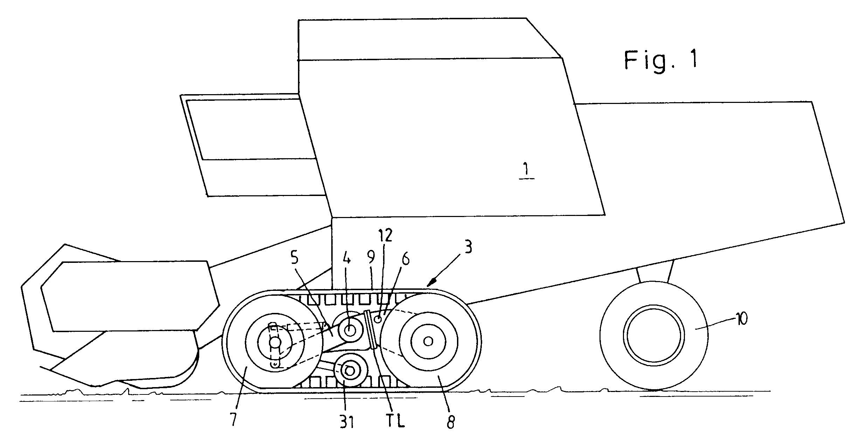

- Fig. 1: eine schematische Seitenansicht eines Mähdreschers mit einem einen Teil der Mähdrescherlänge einnehmenden Raupenfahrwerk,

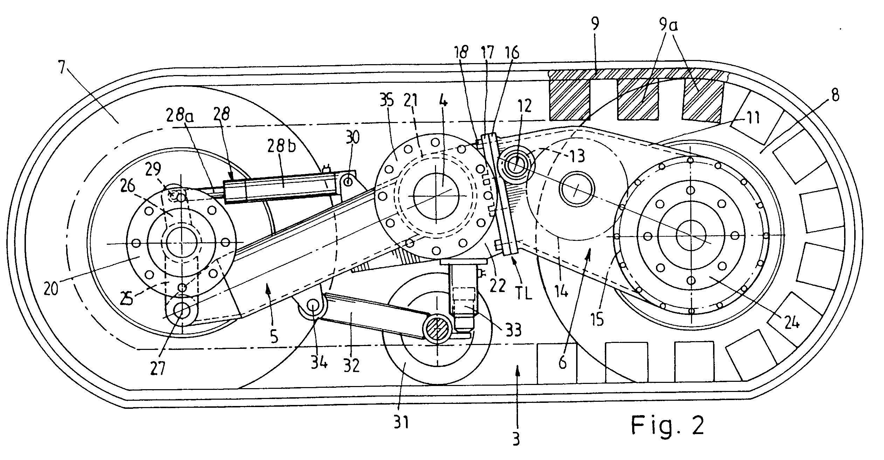

- Fig. 2: eine Seitenansicht des Raupenfahrwerkes mit an um eine horizontale Achse pendelnd aufgehängten Schwingen gelagerten Zwillingsrädern und einem darum endlos umlaufenden Raupenband, wobei die hintere Schwinge als abtrennbares Getriebegehäuse mit Antrieb für das hintere Zwillingsrad ausgebildet ist,
- Fig. 3: eine Seitenansicht des hinteren Teiles des Raupenfahrwerkes mit im Abtrennbereich der hinteren Schwinge eingesetztem Adapterteil zur Längenveränderung des Raupenfahrwerkes,

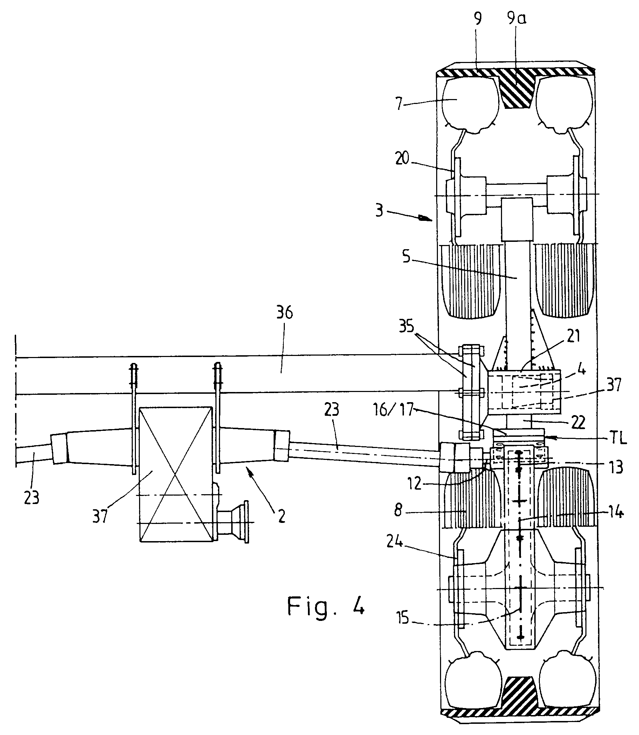

- Fig. 4: eine Draufsicht auf die in eienr Mähdrescherseite angeordnete Fahreinheit des Raupenfahrwerkes mit Kardanwellenantrieb.

Das Raupenfahrwerk für Erntemaschinen (1), insbesondere Mähdrescher, weist zwei von einem gemeinsamen Antrieb (2) aus angetriebene, in den beiden Seiten der Erntemaschine (1) angeordnete Räder-Raupenband-Fahreinheiten (3) auf. Diese beiden Räder-Raupen-Fahreinheiten (3) haben gleiche in Fahrtrichtung (A) verlaufende Länge und das daraus bestehende Raupenfahrwerk nimmt einen Teil der Länge der Erntemaschine (1) ein, so daß es praktisch eine Kurzraupe bildet, die für die Erntemaschine (1) mit einem zusätzlichen Radpaar (10) das gesamte Fahrwerk ergibt.

Jede Räder-Raupenband-Fahreinheit (3) hat zwei um eine gemeinsame horizontale, quer zur Fahrtrichtung (A) verlaufende Achse (4) höhenverschwenkbar gelagerte Schwingen (5, 6), an deren freien Enden jeweils ein Zwillingsrad (8) drehbar gelagert ist; um beide Zwillingsräder (7, 8) läuft geführt ein endloses Raupenband (9) um.

Außerhalb der Achse (4) ist in einer Schwinge (6) eine Trennlinie (TL) gelegt und in dieser Trennlinie (TL) besteht eine lösbare Verbindung mit der über die Achse (4) hinaus verlängerten anderen Schwinge (5). Die abtrennbare Schwinge (6) ist als Getriebegehäuse (11) mit Kardanwelleneingang (12) und Zahnradgetriebe (13-15) zum Antrieb des an der abtrennbaren Schwinge (6) gelagerten Zwillingsrades (8) ausgebildet.

Die Trennlinie (TL) liegt in der in Fahrtrichtung (A) hinteren Schwinge (6) und es wird nur das hintere Zwillingsrad (8) angetrieben.

In der Trennlinie (TL) ist eine Flanschverbindung (16, 17) zwischen beiden Schwingen (5, 6) vorgesehen, wobei an jeder Schwinge (5, 6) ein Flansch (16, 17) befestigt ist und beide Flansche (16, 17) durch Schrauben (18) lösbar zusammengehalten werden.

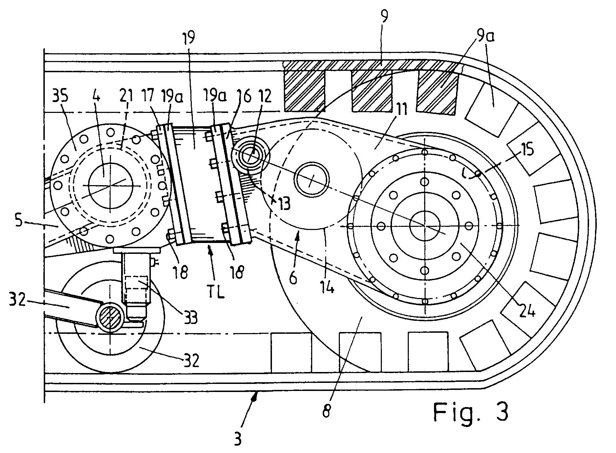

In der Trennlinie (TL) läßt sich zur Veränderung der Länge der Räder-Raupenband-Fahreinheit (3) -des Achsabstandes der beiden Zwillingsräder (7, 8)- zwischen die Flanschverbindung (16, 17, 18) ein Adapterteil (19) in Form eines Kastenteiles mit Flanschen (19a)) einsetzen und durch Schrauben (18) mit den Flanschen (16, 17) verbinden (Fig. 3).

Die in Fahrtrichtung (A) vordere Schwinge (5) ist als langgestrecktes Kastenprofil ausgebildet und steht mit einem Längenende mit der Achslagerung (20) des vorderen Zwillingsrades (7) in Gelenkververbindung. Im anderen Längenendbereich zeigt diese Schwinge (5) eine Lagerbuchse (21) zur Aufnahme der quer zur Fahrt- und Schwingenlängsrichtung (A) verlaufenden horizontalen Achse (4) und ein an diese Lagerbuchse (21) angesetztes, die Schwingenverlängerung über die Achse (4) hinaus bildendes Flansch-Anschlußteil (22) für die Verbindung mit der hinteren Schwinge (6).

Der Kardanwelleneinang (12) liegt im geringen Abstand zur Trennlinie (TL) in der getriebegehäuseförmigen Schwinge (6) und das Zahnradgetriebe ist von einem auf der Kardanwelle (23) sitzenden Antriebsritzel (13), einem damit kämmenden Zwischenzahnrad (14) und einem auf der Achslagerung (24) des Zwillingszahnrades (8) festgelegten, vom Zwischenzahnrad (14) angetriebenen Zahnrad (15) gebildet.

Das vordere Zwillingsrad (7) weist an seiner Achslagerung (20) einen doppelarmigen Lager- und Spannhebel (25, 26) auf, an dessen nach unten gerichteten Lagerarm (25) in einer waagerechten Achse (27) die vordere Schwinge (5) mit ihrem freien Ende gelenkig angreift. Auf den nach oben gerichteten Spannarm (26) wirkt ein von einem Druckmittelzylinder gebildetes Spannorgan (28) mit seiner Kolbenstange (28a) in einer Achse (29) ein und dieses Spannorgan (28) ist mit seinem Zylindergehäuse (28b) in einer Achse (30) an der Schwinge (5) gelenkig gelagert.

Zwischen den beiden Zwillingsrädern (7, 8) ist ein auf das Raupenband (9) einwirkendes Stützrad (31) angeordnet, welches über einen Gelenkhebel (32) in einer waagerechten Achse (34) höhenbewegbar mit der vorderen Schwinge (5) verbunden ist und unter Druckeinwirkung einer an der Schwinge (5) -z.B. dessen Anschlußteil (22)- festgelegten Druckmittelfeder (33) steht.

Die vordere Schwinge (5) ist mit ihrer Lagerbuchse (21) über eine Flanschverbindung (35) an einem Maschinen-Querträger (36) befestigt und durch eine stirnseitige Schraubverbindung (37) wird die Lagerbuchse (21) auf der Achse (4) in Achsrichtung lagefixiert.

Beide Räder-Raupenband-Fahreinheiten (3) werden von einem an dem Maschinen-Querträger (36) befestigten Antriebsgetriebe (37), in das der Antrieb (2) eingeleitet wird, über je eine davon abgehende Kardanwelle (23) mit ihren hinteren Zwillingsrädern (8) angetrieben.

Die Zwillingsräder (7, 8) sind in bevorzugter Weise von Luftreifen gebildet und das Raupenband (9) ist von einem Kunststoff- oder Gummiband gebildet, welches mit Führungsstegen (9a) zwischen die Zwillingsreifen umlaufend geführt und gegen seitliches Auswandern gesichert eingreift.

## Patentansprüche

1. Raupenfahrwerk für Erntemaschinen (1), mit in beiden Maschinenseiten angeordneter Räder-Raupenband-Fahreinheit (3), welche zwei um eine gemeinsame horizontale, quer zur Fahrtrichtung (A) verlaufende Achse (4) höhenverschwenkbar gelagerte Schwingen (5, 6), zwei an den freien Enden der beiden Schwingen drehbar gelagerte Zwillingsräder (7, 8) und ein um beide Zwillingsräder geführt endlos umlaufendes Raupenband (9), ein auf mindestens eine Zwillingsradlagerung einwirkendes Spannorgan (28) für das Raupenband
und einen Antrieb für mindestens ein Zwillingsrad (8) aufweist,
dadurch gekennzeichnet, daß außerhalb der Achse (4) in einer Schwinge (6) eine Trennlinie (TL) gelegt ist,
in dieser Trennlinie (TL) eine lösbare Verbindung (16, 17, 18) mit der über die Achse (4) hinaus verlängerten anderen Schwinge (5) besteht und diese abtrennbare Schwinge (6) als Getriebegehäuse (11) mit Kardanwelleneingang (12) und Zahnradgetriebe (13, 14, 15) zum Antrieb des an der abtrennbaren Schwinge (6) gelagerten Zwillingsrades (8) ausgebildet ist.

2. Raupenfahrwerk nach Anspruch 1, dadurch gekennzeichnet, daß die Trennlinie (TL) in der in Fahrtrichtung (A) hinteren Schwinge (6) liegt und das hintere Zwillingsrad (8) angetrieben ist.

3. Raupenfahrwerk nach Anspruch 1 oder 2, dadurch gekennzeichnet, daß in der Trennlinie (TL) eine durch Schrauben zusammengehaltene Flanschverbindung (16, 17) zwischen beiden Schwingen (5, 6) vorgesehen ist.

4. Raupenfahrwerk nach einem der Ansprüche 1 bis 3, dadurch gekennzeichnet, daß in der Trennlinie (TL) zur Veränderung der Länge der Räder-Raupenband-Fahreinheit (3) zwischen die Flanschverbindung (16, 17) ein Adapterteil (19) in Form eines Kastenteiles mit Flanschen (19a) einsetzbar und durch Schrauben (18) festlegbar ist.

5. Raupenfahrwerk nach einem der Ansprüche 1 bis 4, dadurch gekennzeichnet, daß die in Fahrtrichtung (A) vordere Schwinge (5) als langgestrecktes Kastenprofil ausgebildet ist, mit einem Längenende mit der Achslagerung (20) des vorderen Zwillingsrades (7) in Gelenkverbindung steht und im anderen Längenendbereich eine Lagerbuchse (21) zur Aufnahme der quer zur Fahrt- und Schwingenlängsrichtung (A) verlaufende Achse (4) und ein an die Lagerbuchse (21) angesetztes, die Schwingenverlängerung über die Achse (4) hinaus bildendes Flansch-Anschlußteil (22) für die Verbindung mit der hinteren Schwinge (6) aufweist.

6. Raupenfahrwerk nach einem der Ansprüche 1 bis 5, dadurch gekennzeichnet, daß der Kardanwelleneingang (12) im geringen Abstand zur Trennlinie (TL) in der getriebegehäuseförmigen Schwinge (6) liegt und das Zahnradgetriebe von einem auf der Kardanwelle (23) sitzenden Antriebsritzel (13), einen damit kämmenden Zwischenzahnrad (14) und einem auf der Achslagerung (24) des hinteren Zwillingszahnrades (8) festgelegten, vom Zwischenzahnrad (14) angetriebenen Zahnrad (15) gebildet ist.

7. Raupenfahrwerk nach einem der Ansprüche 1 bis 6, dadurch gekennzeichnet, daß das vordere Zwillingsrad (7) an seiner Achslagerung (20) einen doppelarmigen Lager- und Spannhebel (25, 26) aufweist, an dessen nach unten gerichteten Lagerarm (25) in einer waagerechten Achse (27) die vordere Schwinge (5) mit ihrem freien Ende gelenkig angreift und an dessen nach oben gerichteten Spannarm (26) das von einem Druckmittelzylinder gebildete Spannorgan (28) mit seiner Kolbenstange (28a) in einer Achse (29) und mit seinem Zylindergehäuse (28b) in einer Achse (30) an der Schwinge (5) gelenkig gelagert ist.

8. Raupenfahrwerk nach einem der Ansprüche 1 bis 7, dadurch gekennzeichnet, daß zwischen den beiden Zwillingsrädern (7, 8) unter der waagerechten Achse (4) ein auf das Raupenband (9) einwirkendes Stützrad (31) angeordnet ist, welches über einen Gelenkhebel (32) höhenbewegbar mit der vorderen Schwinge (5) verbunden ist und unter Druckeinwirkung einer an der Schwinge (5) festgelegten Druckmittelfeder (33) steht.

9. Raupenfahrwerk nach einem der Ansprüche 1 bis 8, dadurch gekennzeichnet, daß die vordere Schwinge (5) mit ihrer Lagerbuchse (21) über eine Flanschverbindung (35) an einem Maschinen-Querträger (36) befestigt und durch eine stirnseitige Schraubverbindung (37) die Lagerbuchse (21) auf der Achse (4) lagefixiert ist.

10. Raupenfahrwerk nach einem der Ansprüche 1 bis 9, dadurch gekennzeichnet, daß die hinteren Zwillingsräder (8) der beiden Räder-Raupenband-Fahreinheiten (3) von einem an dem Maschinen-Querträger (36) befestigten Antriebsgetriebe (37) des darin eingreifenden Antriebes (2) über je eine davon abgehende Kardanwelle (23) angetrieben sind.

## Claims

1. A tracked undercarriage for harvesters (1) with a wheel-track drive unit (3) disposed on both sides of the machine, which has two rockers (5, 6), the rockers being height-adjustably seated on a common, horizontal axle (4) extending transversely in respect to a direction (A) of travel, two dual wheels (7, 8), rotatably seated on free ends of the two rockers, an endlessly revolving track (9) guided around both dual wheels, one tensioning element (28) for the track acting on at least one dual wheel bearing, and a drive for at least one dual wheel (8),
characterized in that
a separating line (TL) is drawn outside of the axle (4) in one of the rockers (6), a releasable connection (16, 17, 18) with the other rocker (5) extended past the axle (4) is located in this separation line (TL), and
the removable rocker (6) comprises a transmission housing (11) with a cardan shaft inlet (12) and toothed-wheel gear (13, 14, 15) for driving the dual wheel (8) seated on the removable rocker (6).

2. The tracked undercarriage in accordance with claim 1, wherein the separation line (TL) lies in the removable rocker (6) which is located to the rear in the direction (A) of travel, and a rear one of the dual wheels (8) is powered.

3. The tracked undercarriage in accordance with claim 1 or 2, wherein a flanged connection (16, 17), held together by bolts, is provided in the separation line (TL) between the two rockers (5, 6).

4. The tracked undercarriage in accordance with any of claims 1-3, comprising an adapter element (19) in the form of a box element with flanges (19a) which can be inserted along the separation line (TL) between the flanged connection (16, 17) and fixed in place by means of bolts (18) for changing the length of the wheel-track drive unit (3).

5. The tracked undercarriage in accordance with any of claims 1-4, wherein the rocker (5) at the front in the direction (A) of travel comprises an elongated box profile, and wherein the rocker is in hinged connection at a longitudinal end thereof with an axle bearing (20) of a front dual wheel (7), includes a bearing bush (21) at the other longitudinal end thereof for receiving the horizontal axle (4) extending transversely to the direction (A) of travel and generally to a linear direction of the rocker, and includes a flange connecting element (22) for connection with the rear rocker (6) attached to the bearing bush (21) and constituting an extension of the rocker beyond the axle (4).

6. The tracked undercarriage in accordance with any of claims 1-5, wherein, at a short distance from the separation line (TL), the cardan shaft inlet (12) is located in the removable rocker (6) comprising a transmission housing, and wherein the toothed gear drive consists of a drive pinion gear (13) seated on a cardan shaft (23), an intermediate gear wheel (14) meshing with the drive pinion gear and a gear wheel (15), the gear wheel (15) being fixed on an axle bearing (24) of the rear dual wheel (8) and driven by the intermediate gear wheel (14).

7. The tracked undercarriage in accordance with any of claims 1-6, wherein at the axle bearing (20), the front dual wheel (7) includes a double-armed seating and tensioning lever (25, 26), the lever including a downward-oriented seating arm (25) hingedly engaged by a free end of the front rocker (5) on a horizontal shaft (27), the lever including an upward-oriented seating arm (26) including said tensioning element (28), comprising a pressure medium cylinder, the tensioning element being hingedly seated with a piston rod (28a) thereof on a shaft (29), and with a cylinder housing thereof (28b) on a shaft (30) at the rocker (5).

8. The tracked undercarriage in accordance with any of claims 1-7, wherein a support wheel (31) acting on the track (9) is disposed between the two dual wheels (7, 8) under the horizontal axle (4) and is connected and movable in height, via a hinged lever (32) with the front rocker (5) and is affected by the pressure of a pressure medium spring (33) fixed in place on the rocker (5).

9. The tracked undercarriage in accordance with any of claims 1-8, wherein with the bearing bush (21) the front rocker (5) is fastened via a flanged connection (35) on a transverse machine support (36), and the bearing bush (21) is fixed in place on the axle (4) by means of a bolt connection (37) at the front end.

10. The tracked undercarriage in accordance with claim 9 wherein the rear dual wheels (8) of both track-wheel drive units (3) are powered by a drive transmission (37), fastened on the transverse machine support (36), of the drive (2) engaging it via a respective cardan shaft (23) extending therefrom.

## Revendications

1. Train de roulement à chaîne pour des moissonneuses batteuses (1) comprenant un élément d'entraînement (3) à roues et chaîne de part et d'autre de la machine, comportant deux bras oscillants (5, 6), les bras oscillants étant disposés de manière à osciller en hauteur autour d'un axe horizontal commun (4) s'étendant transversalement par rapport à la direction (A) de déplacement, deux roues doubles (7, 8) montées à rotation sur des extrémités libres des deux bras oscillants, une chaîne sans fin (9) guidée autour des deux roues doubles, un élément tendeur (28) pour la chaîne agissant sur au moins un palier de roue double, et une motorisation pour au moins une roue double (8),
caractérisé en ce que
une ligne de séparation (TL) passe hors de l'axe (4) par un des bras oscillants (6), une liaison démontable (16, 17, 18) avec l'autre bras oscillant (5) qui s'étend au-delà de l'axe (4) est située au niveau de cette ligne de séparation (TL), et ce bras oscillant amovible (6) est configuré en boîtier de transmission (11) muni d'un raccord pour arbre de Cardan (12) et d'un engrenage (13, 14, 15) pour entraîner la roue double (8) montée sur le bras oscillant amovible (6).

2. Train d'entraînement à chaîne selon la revendication 1, caractérisé en ce que la ligne de séparation (TL) est située sur le bras oscillant arrière (6) par rapport à la direction de déplacement (A) et en ce que la roue double arrière (8) est motorisée.

3. Train d'entraînement à chaîne selon la revendication 1 ou 2, caractérisé en ce qu'il comprend une liaison à bride (16, 17) et boulons au niveau de la ligne de séparation (TL) entre les deux bras oscillants (5, 6).

4. Train d'entraînement à chaîne selon l'une quelconque des revendications 1 à 3, caractérisé en ce qu'il comprend un élément d'adaptation (19) sous la forme d'un boîtier à bride (19a) disposé selon la ligne de séparation (TL) au niveau de la liaison à bride (16, 17) et maintenu au moyen de boulons (18) pour modifier la longueur de l'élément d'entraînement à chaîne (3).

5. Train d'entraînement à chaîne selon l'une quelconque des revendications 1 à 4, caractérisé en ce que le bras oscillant (5) antérieur dans la direction de déplacement (A) est sous forme de profilé en caisson allongé, est articulé par l'une de ses extrémités longitudinales au palier (20) de la roue double avant (7), comporte un coussinet de palier (21) à son autre extrémité longitudinale pour recevoir l'axe horizontal (4) s'étendant transversalement à la direction de déplacements (A) et à la direction longitudinale du bras oscillant, et comprend un élément de liaison à bride (22) pour réaliser une liaison avec le bras oscillant arrière (6), fixé au coussinet de palier (21) et constituant une extension du bras oscillant au-delà de l'axe (4).

6. Train d'entraînement à chaîne selon l'une quelconque des revendications 1 à 5, caractérisé en ce que le raccord d'arbre de Cardan (12) est disposé dans le bras oscillant amovible (6) formant boîtier à une faible distance de la ligne de séparation (TL), et en ce que l'engrenage comprend un pignon moteur (13) fixé à l'arbre de Cardan (23), une roue dentée intermédiaire (14) engrenant avec le pignon moteur, et une roue dentée (15) montée sur un axe (24) de la roue double arrière (8), entraînée par la roue dentée intermédiaire (14).

7. Train d'entraînement à chaîne selon l'une quelconque des revendications 1 à 6, caractérisé en ce que, au niveau de son axe (20), la roue double avant (7) comporte un levier double de positionnement et de tension (25, 26) comprenant un bras support (25) s'étendant vers le bas et articulé à une extrémité libre du bras oscillant avant (5) sur un axe horizontal (27), le levier comportant un bras support (26) orienté vers le haut et muni dudit élément de tension (28) constitué d'un cylindre à gaz, l'élément de tension étant articulé par sa tige de piston (28a) sur un axe (29), et par son boîtier cylindrique (28b) sur un axe (30) du bras oscillant (5).

8. Train d'entraînement à chaîne selon l'une quelconque des revendications 1 à 7, caractérisé en ce qu'une roue de support (31) agissant sur la chaîne (9) est disposée entre les deux roues doubles (7, 8) sous l'axe horizontal (4) et est reliée de manière à pouvoir se déplacer en hauteur par un levier articulé (32) au bras oscillant avant (5) et est affectée par la pression d'un cylindre à gaz (33) fixé sur le bras oscillant (5).

9. Train d'entraînement à chaîne selon l'une quelconque des revendications 1 à 8, caractérisé en ce que le coussinet de palier (21) du bras oscillant avant (5) est fixé par l'intermédiaire d'une liaison à bride (35) sur un support de machine transverse (36), et en ce que le coussinet de palier (21) est fixé sur l'axe (4) au moyen d'une liaison par un boulon (37) en bout.

10. Train d'entraînement à chaîne selon la revendication 9, caractérisé en ce que les roues doubles arrière (8) des deux ensembles d'entraînement à chaîne (3) sont entraînées par une transmission motrice (37) fixée sur le support de machine transverse (36) par l'intermédiaire de joints de Cardan respectifs (23) prolongés par des axes (2) s'engageant dans la transmission.
